# DEMANDE DE BREVET EUROPEEN

(11) **EP 3 590 343 A1**
(43) Date de publication de la demande: **08.01.2020**
(21) Numéro de dépôt: 18305875.9
(22) Date de dépôt: 04.07.2018
(51) Int. Cl.: A01N 57/20, A01N 59/16, A01N 25/34, A61L 2/03

(54) **MATERIAUX ET DISPOSITIFS BIOCIDES**

(71) Demandeur: Centre National de la Recherche Scientifique, 75794 Paris Cedex 16 (FR); Université d'Aix Marseille, 13284 Marseille Cedex 07 (FR); Institut National de la Santé et de la Recherche Médicale, 75013 Paris (FR)
(72) Inventeur: RAIMUNDO, Jean-Manuel, 13009 Marseille (FR); CAMPLO, Michel, 84800 L'isle sur la sorgue (FR); GARZINO, Frédéric, 13009 Marseille (FR); BRUNEL, Frédéric, Manuel, Cyprien, 30000 Nîmes (FR); BOLLA, Jean Michel, 13009 Marseille (FR); LAUTARD, Christelle, Stanislava, Janine, 13009 Marseille (FR)
(74) Mandataire: Osha Liang

(57) **Abrégé**

La présente description porte sur un matériau pour une utilisation biocide, le matériau comprenant une structure conductrice et des groupements cationiques et/ou anioniques zwittérioniques et/ou ampholytes et reliés de façon covalente à ladite structure conductrice. La présente description porte également sur un dispositif biocide, sur un système biocide et sur une méthode non-thérapeutique pour donner des propriétés biocides à un support exposé à des bactéries ou autres microorganismes nuisibles.

## Description

La présente description porte notamment mais pas exclusivement sur matériau pour une utilisation biocide et sur une utilisation non-thérapeutique d'un tel matériau pour donner des propriétés biocides à des supports exposés à des organismes jugés nuisibles. La présente description porte également sur un dispositif biocide, un système et une méthode capables d'exercer une fonction biocide, par exemple pour donner des propriétés biocides à des supports exposés à des organismes jugés nuisibles, comme par exemple les bactéries, les virus ou les champignons.

### ETAT DE L'ART

Malgré des efforts de recherche considérables, les méthodes pour limiter la prolifération et la fixation des bactéries sur des matériaux exposés à celles-ci présentent des inconvénients.

De façon générale, il est connu que les microorganismes tels que les bactéries ont tendance à s'attacher à des surfaces hydrophobes et non polaires (Bendinger R et coll. 1993. Appl. Environ. Microbiol., 59:3973-3977 ; Pringle JH & Fletcher M. 1983. Appl. Environ. Microbiol., 45:811-819 ; Fletcher M & Loeb GI. 1979. Appl. Environ. Microbiol., 37:67-72). Ainsi, par exemple, les films de conditionnement d'emballages alimentaires ou cosmétiques réalisés en matériaux organiques peuvent servir de source de nutriments aux bactéries en cours d'attachement, permettant le succès d'une étape de colonisation primaire pour des bactéries pionnières. Le taux d'établissement des bactéries pionnières dépend non seulement de la nature de la surface de tels matériaux, mais également de la rhéologie locale, en particulier des caractéristiques de vélocité et de turbulence du milieu liquide environnant contenant les bactéries en suspension (Donlan RM. 2002. Emerg. Infect. Dis., 8:881-890).

En outre, dans le milieu médical, les implants sont sujets à des infections provoquées par la formation de biofilms bactériens à leur surface, et ce malgré une stérilisation préalable. Ces infections altèrent le fonctionnement des implants et entraînent des soins annexes souvent lourds pour le patient et très coûteux pour le milieu hospitalier.

Afin de faire face à ce problème, plusieurs méthodes ont été mises en oeuvre, afin de limiter la formation d'un biofilm bactérien à la surface des implants.

Une méthode connue prévoit l'imprégnation du matériau utilisé pour réaliser l'implant par des antibiotiques. Cependant, cette méthode présente des inconvénients, à savoir l'épuisement rapide de l'antibiotique et une apparition éventuelle de phénomènes de résistance auxdits antibiotiques. Une telle méthode ne peut être valorisée que pour des implantations à très court terme. Au contraire, pour des implantations à long terme, une méthode se limitant à l'imprégnation du matériau par des antibiotiques implique des risques pour le patient et des coûts hospitaliers élevés en cas de rejet, une opération chirurgicale et un changement de l'implant étant souvent nécessaires.

Sont connus de l'art antérieur des polymères bactéricides, c'est-à-dire des polymères capables de tuer les bactéries, et des polymères à propriétés d'anti-adhésion, c'est-à-dire des polymères capables de repousser les bactéries.

Par exemple, des polymères porteurs de groupements bactéricides tels que les sels d'ammonium, de phosphonium et de sulfonium sont décrits dans El-Refaie Kenawy et al. « Biologically active polymers: synthesis and antimicrobial activity of modified glycidyl methacrylate polymers having a quaternary ammonium and phosphonium groups », Journal of Controlled Release, Volume 50, Issues 1-3, 2 January 1998, Pages 145-152. Les performances de ces polymères en termes d'activité bactéricide diffèrent de manière significative. Le choix du polymère utilisé dépend en effet de l'application visée et du type de bactéries à éliminer.

Durant la dernière décennie, une nouvelle méthode de traitement a vu le jour. Elle consiste en un dépôt ou un greffage par voie chimique, de polymères comprenant des groupements possédant des propriétés bactéricides ou de polymères à propriétés d'anti-adhésion sur la surface d'un matériau. Du fait des propriétés intrinsèques des polymères (réticulation ou encombrement stérique des chaînes), les groupements bactéricides portés par les polymères sont alors figés dans le polymère. Les polymères à propriétés d'anti-adhésion, une fois greffés en surface d'un biomatériau, modifient l'état physico-chimique de la surface de manière à empêcher l'adhésion des bactéries. Les propriétés thermomécaniques du matériau initial, avant le traitement, peuvent alors être conservées.

Cependant, les polymères utilisés dans l'état de l'art, qu'ils soient bactéricides ou bactériostatiques, fonctionnent de façon statique, c'est-à-dire que les groupements restent dans une position fixe dans le polymère, et finissent par perdre leur propriétés après une certaine exposition aux bactéries. Ainsi, aucun des polymères connus ne peut garantir une fonction bactéricide et/ou d'anti-adhésion pour une durée suffisante, notamment pour une durée égale à la vie désirée du produit dans lequel les polymères sont utilisés, ou une fonction bactéricide et/ou d'anti-adhésion qui puisse être activée ou réactivée sur commande, en cas de perte ou de baisse de telles fonctions.

De même, aucun traitement n'est connu pour détruire des bactéries et/ou pour prévenir la croissance de biofilms bactériens à la surface d'un implant déjà posé. En outre, aucun matériau ayant une activité biocide n'est connu pour être capable de maintenir cette activité dans le temps une fois greffé sur un support, ou, en cas de perte ou de baisse de l'activité biocide, pour pouvoir récupérer une telle activité sur commande.

### RESUME

Dans ce qui suit, le terme « comprendre » est synonyme de (signifie la même chose que) « inclure » et « contenir », et est inclusif ou ouvert et n'exclue pas d'autres éléments non récités. En outre, dans la présente description, les termes « environ » et « substantiellement » sont synonymes de (signifient la même chose que) une marge inférieure et/ou supérieure de 10% de la valeur respective.

Dans la présente description ainsi que dans les revendications, par utilisation, fonction, propriété ou activité biocide on entend non seulement toute utilisation, fonction, propriété ou activité antimicrobienne, y compris bactéricide, mais également toute utilisation, fonction ou activité bactériostatique. Les composés biocides sont antimicrobiens dans le sens où ils sont capables de détruire, repousser ou rendre inefficaces les organismes jugés nuisibles comme par exemple les bactéries, les virus, les parasites ou les champignons, à en prévenir l'action ou à les combattre de toute autre manière. De façon correspondante, les composés bactéricides sont capables de détruire, repousser ou rendre inefficaces les bactéries. Les composés bactériostatiques inhibent la croissance et la reproduction des bactéries. Ainsi, dans le cas des bactéries, une activité biocide peut comprendre la suppression de bactéries et/ou de leur croissance sur une surface.

Dans la présente description et dans les revendications, on entend par structure conductrice une structure conductrice d'électricité, *i.e.* dont la conductivité électrique est d'au moins 10⁻⁴ S/cm, tel qu'un métal ou un polymère conducteur intrinsèque.

Dans la présente description ainsi que dans les revendications, par polymère on entend une molécule pouvant être linéaire, ramifiée ou dendritique, et comprenant un enchaînement covalent d'unités répétitive dérivant d'un ou de plusieurs motifs monomères, qui peuvent être identiques dans le cas d'un homopolymère ou différents dans le cas d'un copolymère. Les oligomères, comprenant un nombre plus restreint d'unités répétitives que les polymères, tombent également sous la définition de « polymère » dans la présente description.

Dans la présente description ainsi que dans les revendications, par polymère conducteur intrinsèque on entend un polymère (*i.e.,* un homopolymère ou un copolymère) dont la conductivité électrique n'est due qu'à sa structure, notamment qu'à une structure pi-conjuguée, dans laquelle il existe une alternance de simples et de doubles liaisons le long du squelette du polymère. En d'autres termes, la conduction due à l'addition de charges comme dans le cas de polymères à conduction extrinsèque est exclue.

Dans présente description, on entend par hétéroatome un atome possédant au moins un doublet non liant d'électrons, mais qui n'est ni du carbone, ni de l'hydrogène et non métallique.

Dans la présente description, on entend par UFC Unité Formatrice de Colonie, une unité utilisée en microbiologie pour estimer le nombre de bactéries ou de cellules fongiques viables dans un échantillon. Par DO, on entend la densité optique, par incubation ON, on entend une incubation dans un milieu de culture standard à une température de croissance idéale pour l'espèce bactérienne pendant une période de 18heures (+/- 6h).

Selon un premier aspect, la description concerne un matériau pour une utilisation biocide, le matériau comprenant une structure conductrice, et des groupements cationiques et/ou anioniques et/ou zwittérioniques et/ou ampholytes reliés de façon covalente à la structure conductrice. Lesdits groupements peuvent être reliés par l'intermédiaire de chaînes covalentes plus ou moins longues, ces chaînes covalentes étant reliées de façon covalente à la fois à la structure conductrice et auxdits groupements.

Selon un deuxième aspect, la description porte sur une utilisation non-thérapeutique d'un matériau comprenant :
- une structure conductrice et
- des groupements cationiques et/ou anioniques et/ou zwittérioniques et/ou ampholytes reliés de façon covalente à ladite structure conductrice,
pour donner des propriétés biocides à des supports.

Que l'application soit thérapeutique ou pas, selon une ou plusieurs formes de réalisation, la structure conductrice est choisie parmi le groupe comprenant les métaux, y compris les alliages de métaux, les polymères pi-conjugués et les combinaisons de ceux-ci.

Un tel matériau présente une activité biocide à long terme car toute baisse d'activité éventuellement subie dans le temps par le matériau, par exemple suite à un greffage ou à un dépôt du matériau sur un support, peut être compensée par une simple manipulation. Notamment, l'activité biocide peut être complètement récupérée ou modulée sur commande, si besoin, en soumettant le matériau à une tension électrique prédéterminée. Ladite tension dépend de la structure du matériau mais peut être adaptée et ajustée via des modifications chimiques du matériau, et peut être comprise, par exemple, entre environ -1,2V et environ +1,2V. Dans certaines applications, ladite tension peut être inférieure au potentiel d'électrolyse de l'eau : de cette façon, il est possible d'éviter la formation de peroxydes d'hydrogène ou des variations de pH trop importantes.

La tension électrique peut être soit continue, soit alternative. D'autre part, la tension électrique peut être appliquée de manière continue dans le temps ou discontinue lors de périodes prédéterminées. La façon dont la tension électrique peut être appliquée peut être définie en fonction de l'application visée, de l'ampleur ou du niveau de risque de colonisation d'organismes jugés nuisibles, du type d'organisme nuisible à traiter ou de tout autre facteur à prendre en compte lors d'une utilisation biocide.

En outre, un tel matériau inhibe l'adhésion d'organismes tels que les bactéries ou autres, comme les virus ou les champignons, à la surface d'un support composé ou revêtu par ce matériau.

Sans vouloir être liés par une quelconque théorie, les inventeurs estiment qu'une électrostimulation prédéterminée telle que celle obtenue en soumettant le matériau à une tension électrique prédéterminée implique une génération de charges le long de la structure conductrice impliquant une mobilité et une accessibilité renouvelée des groupements reliés à la structure conductrice. Les inventeurs estiment que l'électrostimulation du matériau permet d'assurer un effet biocide synergique: d'une part en entraînant un changement de la répartition des charges à la surface du matériau, ce qui aura pour conséquence un effet de prévention de formation de biofilm (effet anti-adhésion) voire de décollement d'un biofilm éventuellement présent avant l' électrostimulation, et d'autre part en assurant la mobilité des groupements reliés à la structure conductrice, i.e. leur redéploiement, entraînant par-là une activation de leurs propriétés biocides. En tant que tels, *i.e.* lorsqu'ils ne sont pas reliés à la structure conductrice, les groupements selon la présente description peuvent présenter des propriétés biocides, mais ce n'est pas une condition nécessaire à leur utilisation dans le matériau.

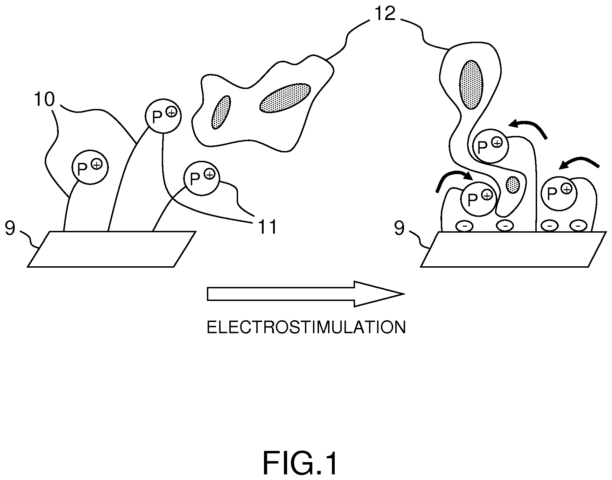

La FIG. 1 permet d'illustrer le mécanisme d'action biocide d'un exemple de matériau pour une utilisation biocide soumis à une électrostimulation prédéterminée. La génération de charges à la surface d'une structure conductrice 9, induite par l'électrostimulation du matériau, provoque le redéploiement (flèches) des chaînes 10 porteuses de groupements 11, qui sont des groupements phosphoniums dans cet exemple, ce qui a pour effet de modifier l'interaction des groupements avec une bactérie 12.

Ainsi, par opposition aux matériaux fonctionnant de façon statique rencontrés classiquement, le matériau et ses utilisations selon la présente description offrent des propriétés biocides dynamiques modulables par électrostimulation, et permettent de protéger des supports de la colonisation d'organismes nuisibles sans relargage d'agents biocides dans le milieu.

Le matériau est adapté à une utilisation sur n'importe quel support susceptible d'être exposé à des organismes jugés nuisibles, comme par exemple les bactéries, les virus ou les champignons, par exemple sur un support utilisé dans le domaine médical, vétérinaire, cosmétique ou encore dans le domaine agro-alimentaire.

Dans le domaine médical et vétérinaire, le matériau pour une utilisation biocide selon le premier aspect peut par exemple être utilisé dans les dispositifs médicaux implantables, les emballages médicaux ou les poches de transfusion sanguine. Les utilisations non-thérapeutiques du matériau selon le deuxième aspect peuvent se référer à des trayeuses, ou encore des conduits ou des cuves de stockage de produits agro-alimentaires et/ou de produits cosmétiques. En agro-alimentaire, les matériaux peuvent par exemple s'avérer utiles pour assurer la prévention de la pollution dans les procédés de mise en conserve des aliments.

Selon l'application souhaitée, divers types de biomatériaux peuvent être envisagés pour réaliser des supports qui peuvent être revêtus par le matériau selon la présente description dans le domaine médical et vétérinaire. La liste suivante n'est pas exhaustive et présente les matériaux généralement privilégiés pour des applications médicales et vétérinaires. Pour les prothèses de hanche, on peut par exemple utiliser le titane, l'hydroxyapatite, le chrome, le cobalt, la céramique d'alumine, le polyéthylène, l'alumine ; pour les prothèses dentaires, la résine acrylique, la céramique ou la porcelaine ; pour les pansements, le coton, le plastique, l'acrylique ; pour les préservatifs, le latex, le polyuréthane ou sensoprène ; pour les aiguilles, trocarts, ou cathéters, l'acier inoxydable, le nickel, pour les implants mammaires, le silicone ou le polypropylène ; pour les stents, le cobalt, le chrome, le platine ; pour les sutures, le nylon, le polyester, le polypropylène, l'acide polyglycolique, l'acide glycolique et l'acide lactique, le vicryl, le polydioxanone, le glycolide triméthylène carbonate, le poliglecaprone25, l'agrafe d'inox, la colle cyanoacrylate, pour les lentilles oculaires, l'hydrogel.

Selon une ou plusieurs formes de réalisation, parmi les dispositifs médicaux implantables, le matériau peut être adapté à une utilisation dans un dispositif médical implantable sélectionné dans le groupe comprenant une prothèse orthopédique, un pacemaker, une valve cardiaque, un implant dentaire, une prothèse, un cathéter veineux ou urinaire, un stimulateur cardiaque, un dispositif destiné à l'angioplastie (stent), un ligament artificiel (e.g. genou), des vis plaques de réparation orthopédiques, un défibrillateur, un implant cochléaire, un neurostimulateur, et un système de délivrance de médicaments.

De cette façon, la destruction, sur commande, des bactéries et/ou la prévention, sur commande, de la formation de biofilms bactériens à la surface d'un implant déjà posé sont avantageusement possibles.

En outre, selon une ou plusieurs formes de réalisation, ledit matériau pour lesdites utilisations contient des groupements reliés à la structure conductrice par des liaisons covalentes, par l'intermédiaire d'une chaîne ou non. Dans ces formes de réalisation, particulièrement adaptées à des applications médicales ou environnementales, les groupements ne sont pas dispersés ou diffusés dans l'organisme/environnement comme dans le cas des technologies actuelles.

Selon une ou plusieurs formes de réalisation, la structure conductrice présente une conductivité d'au moins 10⁻⁴ S/cm, par exemple comprise entre environ 10⁻⁴ S/cm et environ 1 S/cm, par exemple comprise entre 10⁻³ S/cm et environ 1 S/cm.

Selon une ou plusieurs formes de réalisation, la structure conductrice est un squelette de polymère conducteur intrinsèque choisi dans le groupe comprenant par exemple la polyaniline, le polypyrrole, le polythiophène, le polyéthylènedioxythiophène (PEDOT), le polycarbazole, le polyphenylsulfide (PPS).

Selon une ou plusieurs formes de réalisation, le polymère conducteur intrinsèque peut comprendre une unité répétitive ayant une formule représentée par la Formule I suivante : 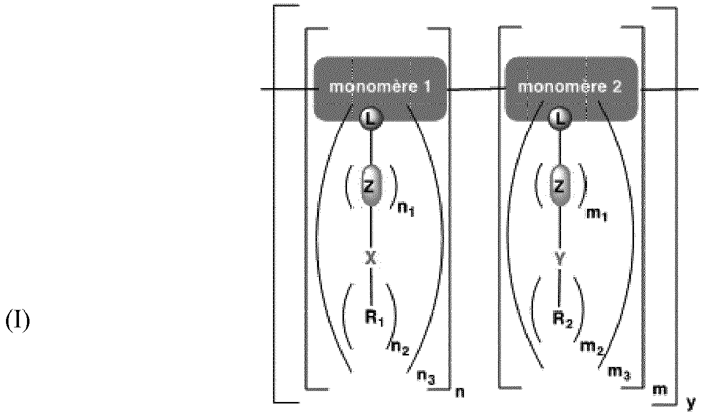 dans laquelle :
- les monomères 1 et 2, identiques ou différents, sont indépendamment sélectionnés dans le groupe comprenant des cycles ou hétérocycles simples, tels que thiophène, furane, éthylènedioxythiophène, pyrrole, l'éthylènedioxypyrrole, aniline, carbazole, benzène, pyridine, benzotriazole, thiazole, triazole, ou des hétérocycles fusionnés, tels que benzothiphène, thiénothiophène, thiénopyrrole, dithiénothiophène, dithiénopyrrole, dithiénofurane, cyclopentadithiophène, fluorénone, fluorène, cyclopentadipyrrole, cyclopentadifurane;
- L est sélectionné dans le groupe comprenant une liaison C-C, C-N, N-C, C-O, C=O, C-S, C=S, O-C, S-C, P-N, P-C, CH₂-C(=O)O-, CH₂-C(=O)S-, CH₂-C(=O)N-, O-C(=O)CH₂-, S-C(=O)CH₂-, N-C(=O)CH₂-.;
- Z est une chaîne aliphatique pouvant comprendre des hétéroatomes sélectionnés dans le groupe comprenant les pnictogènes et les chalcogènes;
- X et Y, sont chargés positivement, négativement ou peuvent être zwittérionique ou encore ampholyte, et sont indépendamment sélectionnés dans le groupe comprenant un atome de phosphore, d'azote, de soufre, d'oxygène, de bore, ou un groupement imidazolium, pipéridinium, morpholinium, guanidinium, pyrrolidinium, phénazinium, thiophénazinium, sulfonium, ammonium, phosphonium, phosphate, sulfate, sulfonate, borate ;
- chacun des n₁, m₁, n₂, m₂, n₃, m₃ est compris entre 0 et 8 ;
- n et m sont compris entre 0 et 8 et au moins l'un de n et m est différent de 0 ;
- R₁ et R₂ sont indépendamment sélectionnés dans le groupe comprenant des groupements alkyles comprenant de 1 à 12 atomes de carbones, aryles ou hétéroaryles.

Selon une ou plusieurs formes de réalisation, le matériau peut constituer le revêtement d'un support, et être relié de façon covalente au support par une réaction de greffage chimique. Dans ces formes de réalisation, l'ensemble support-revêtement peut alors être le produit d'une réaction de greffage chimique entre un précurseur du support et un précurseur du revêtement. Lorsque la structure conductrice du matériau est un polymère conducteur, la réaction de greffage chimique susmentionnée peut par exemple impliquer un groupement fonctionnel relié de façon covalente à la structure du polymère et réagissant avec un autre groupement fonctionnel présent à la surface du précurseur du support. Dans d'autres formes de réalisation, le polymère est simplement déposé sur le support. Dans le cas où la structure conductrice est de type métallique, le matériau biocide pour une utilisation selon le premier aspect et l'utilisation selon le deuxième aspect peut être le produit de la réaction de greffage chimique entre un précurseur métallique et un ou plusieurs précurseurs de chaînes portant les groupements.

Dans chacune de ces formes de réalisation, les groupements cationiques, anioniques, ampholytes, et/ou zwittérioniques peuvent par exemple être sélectionnés dans le groupe comprenant des groupements ammonium, phosphonium, sulfonium, imidazolium, pipéridinium, morpholium, guanidinium, pyrrolidinium, phénazinium, thiophénazinium, carboxylate, phosphate, sulfate, sulfonate, borate et leurs combinaisons.

Selon une ou plusieurs formes de réalisations, les groupements reliés de façon covalente à la structure conductrice sont des groupements cationiques quaternaires.

Selon une ou plusieurs formes de réalisation, les groupements cationiques, anioniques, ampholytes et/ou zwittérioniques incluent des substituants pouvant être identiques ou différents. Ils peuvent par exemple être sélectionnés dans le groupe incluant des chaînes alkyles linéaires comprenant entre quatre et douze atomes de carbone, par exemple entre six et dix atomes de carbone.

Selon une ou plusieurs formes de réalisation, la structure conductrice a une densité de charge comprise entre environ 25% et environ 75%. Cette propriété peut être avantageuse pour un contrôle supplémentaire de la capacité de mobilité, de redéploiement des groupements reliés de façon covalente à la structure conductrice et, en conséquence, de l'activité biocide du matériau.

Selon une ou plusieurs formes de réalisation, le matériau peut être utilisé envers une souche de bactérie sélectionnée dans le groupe comprenant les bactéries du groupe "ESKAPE", qui sont le plus fréquemment rencontrées lors d'infections hospitalières, tels que par exemple les Enterocoques, les Staphylocoques (dorés et coagulase négatifs), les bactéries du genre Klebsiella, Ancinetobacter, ou Pseudomonas, et les Entérobactéries (Escherichia coli, Enterobacter, Salmonella, ...), ainsi que des bactéries rencontrées lors d'infections communautaires (Pulmonaires : Légionella, Pneumocoque ; Urinaires: E. coli).

Selon une ou plusieurs formes de réalisation, le matériau peut être utilisé dans une méthode permettant de traiter les infections déclenchées par une ou plusieurs des bactéries sus-nommées.

Selon un autre aspect, la description concerne un dispositif biocide comprenant un support et un revêtement dudit support, dans lequel le revêtement comprend :
- une structure conductrice, et
- des groupements cationiques et/ou anioniques et/ou zwittérioniques et/ou ampholytes reliés de façon covalente à la structure conductrice.

D'une part, le dispositif biocide de la présente description permet de prévenir la formation de biofilms à la surface dudit support, du fait des propriétés antiadhésives du revêtement. D'autre part, le dispositif biocide de la présente description permet avantageusement, sur commande, de prévenir la formation ou d'enlever un biofilm dudit support. Pour atteindre ces effets, il suffit de soumettre le support et/ou le revêtement à une tension électrique prédéterminée.

Selon une ou plusieurs formes de réalisation, la structure conductrice a une conductivité d'au moins 10⁻⁴ S/cm, par exemple comprise entre environ 10⁻⁴ S/cm et environ 1 S/cm, par exemple comprise entre 10⁻³ S/cm et environ 1 S/cm.

Selon une ou plusieurs formes de réalisation, le support est sélectionné dans le groupe comprenant les dispositifs médicaux, les dispositifs vétérinaires, les emballages alimentaires et/ou cosmétiques ainsi que les conduits ou les cuves de stockage de produits agroalimentaires et/ou cosmétiques.

Selon une ou plusieurs formes de réalisation, le support est un dispositif médical implantable. Dans ce cas, en soumettant le dispositif médical à une tension électrique prédéterminée, il est possible de prévenir la formation d'un biofilm bactérien ou d'enlever un biofilm bactérien dudit dispositif médical, même lorsque le dispositif médical est déjà implanté dans l'organisme d'un patient.

Le dispositif médical implantable peut être sélectionné dans le groupe comprenant une prothèse orthopédique, un pacemaker, une valve cardiaque, un implant dentaire, une prothèse, un cathéter, par exemple veineux ou urinaire, un stimulateur cardiaque, un dispositif destiné à l'angioplastie (stent), un ligament artificiel (e.g. genou), des vis plaques de réparation orthopédiques, un défibrillateur, un implant cochléaire, un neurostimulateur, et un système de délivrance de médicaments. Dans certaines formes de réalisation, le dispositif médical peut être un fibroscope, et la possibilité qu'il soit recouvert d'un revêtement électro-activable présente l'avantage de le stériliser rapidement et efficacement, sans l'endommager.

Le revêtement utilisé dans le dispositif biocide peut être le matériau défini dans une ou plusieurs des formes de réalisation indiquées ci-dessus pour le matériau pour une utilisation biocide. Selon une ou plusieurs formes de réalisation, un matériau tel que défini par une ou plusieurs des formes de réalisation indiquées ci-dessus, différent par rapport à celui constituant le support, peut être greffé ou déposé au support.

Dans le dispositif biocide, qu'il soit médical ou tout autre, le revêtement du support peut avoir une épaisseur comprise entre environ 10 nm et environ 1 µm, par exemple entre environ 10 nm et environ 0,1 µm.

Cependant, selon un autre aspect, particulièrement mais non exclusivement adapté pour certains implants tels que les implants dentaires et pour les emballages alimentaires et/ou cosmétiques, le dispositif biocide comprend un support qui peut être substantiellement composé du matériau tel que défini par une ou plusieurs des formes de réalisation indiquées ci-dessus. Dans ce cas, le support même peut présenter une activité biocide et ne nécessite pas de greffage ou de dépôt de revêtement pour exercer une activité biocide. En conséquence, un tel dispositif biocide comprend un support incluant :
- une structure conductrice, et
- des groupements cationiques et/ou anioniques et/ou zwittérioniques et/ou ampholytes reliés de façon covalente audit à ladite structure conductrice.

Selon une ou plusieurs formes de réalisation, la structure conductrice du dispositif tel que défini par une ou plusieurs formes de réalisation ci-dessus est choisie parmi le groupe comprenant les métaux, les polymères pi-conjugués et les combinaisons de ceux-ci.

Selon un autre aspect, la description concerne un dispositif comprenant un matériau comprenant :
- une structure conductrice et
- des groupements cationiques et/ou anioniques et/ou zwittérioniques et/ou ampholytes reliés de façon covalente à ladite structure conductrice,
pour une utilisation dans une méthode de prévention de colonisation d'organismes nuisibles dans un patient.

Selon un autre aspect, la description concerne un système comprenant un dispositif biocide tel que défini par une ou plusieurs des formes de réalisation indiquées ci-dessus, et un moyen pour soumettre le support et/ou le revêtement dudit support, si présent, à une tension électrique prédéterminée.

Sans vouloir être liés par une quelconque théorie, les inventeurs estiment que par l'application de la tension électrique prédéterminée au support et/ou au revêtement dudit support, si présent, des charges sont générées dans la structure conductrice ce qui a pour effet de redéployer les groupements reliés à ladite structure conductrice et de permettre leur accessibilité ainsi renouvelée, et renouvelable par l'application d'une tension prédéterminée.

Ainsi, selon les formes de réalisation envisagées, le matériau qui peut être utilisé pour réaliser le support et/ou le revêtement dudit support du dispositif biocide se comporte comme une structure tridimensionnelle dynamique lorsqu'il est exposé à la tension électrique prédéterminée (voir FIG. 1). Ce caractère dynamique du matériau peut être utilisé pour contrôler ses fonctions biocide et anti-adhésive.

Par exemple, pour des applications de type médical, notamment pour des dispositifs médicaux implantables, la tension électrique prédéterminée est comprise entre environ -1,2V et environ +1,2V, par exemple entre environ -1V et environ +1V.

Selon une ou plusieurs formes de réalisation, la tension électrique est appliquée, de façon continue ou discontinue, pour un temps prédéterminé, par exemple d'au moins quelques minutes, par exemple entre 5 minutes et quelques heures.

Selon une ou plusieurs formes de réalisation, on peut varier de façon contrôlée la tension électrique, grâce à une boucle de régulation pouvant être adaptée et programmée. La tension électrique peut être variée par exemple de 0 à 0,5V-1,2V, par exemple de 0 à 0,8V, à une vitesse de balayage prédéterminée.

Selon une ou plusieurs formes de réalisation, la vitesse de balayage prédéterminée peut être de 0,01V/sec-1V/sec, par exemple de 0,1V/sec.

Selon un autre aspect, la description concerne une méthode non-thérapeutique pour donner des propriétés biocides à un support, la méthode comprenant :
- le greffage par voie chimique ou le dépôt d'un revêtement sur un support; et
- l'application d'une tension électrique audit support et/ou audit revêtement ainsi greffé ou déposé.
le revêtement comprenant :
- une structure conductrice, et
- des groupements cationiques et/ou anioniques et/ou zwittérioniques et/ou ampholytes reliés de façon covalente à ladite structure conductrice.

Selon une ou plusieurs formes de réalisation, le support n'est pas implanté dans le corps d'un être humain ou d'un animal.

Selon une ou plusieurs formes de réalisation, le support n'est pas un dispositif médical implantable.

Le revêtement peut être composé du matériau tel que défini par une ou plusieurs des formes de réalisation indiquées ci-dessus.

Par exemple, le support peut être un conduit ou une cuve de stockage de produits agro-alimentaires et/ou cosmétiques, par exemple constitués de plastique de type PET, ou d'acier inoxydable.

Selon une ou plusieurs formes de réalisation, le support est un emballage alimentaire et/ou cosmétique. Il peut être composé d'un matériau choisi dans le groupe comprenant tout polymère utilisé dans l'industrie agro-alimentaire et/ou cosmétique pour la fabrication d'emballages. Selon une ou plusieurs formes de réalisation, le support est un dispositif médical.

En cas de dispositif médical implantable, ce dispositif peut être sélectionné dans le groupe des dispositifs médicaux implantables définis plus haut.

Selon une ou plusieurs formes de réalisation, greffer comprend former le matériau biocide in situ, par exemple en formant un polymère ou une composition polymérique in situ, directement à partir de la surface du support à greffer en immobilisant un amorceur de polymérisation sur le support (« grafting from »).

Selon une ou plusieurs formes de réalisation, greffer comprend attacher par voie chimique le matériau une fois qu'il est formé, ou attacher le groupement cationique et/ou anionique et/ou zwittérionique et/ou ampholyte sur le support s'il est déjà lui-même conducteur (« grafting to »).

Le matériau qui peut constituer le revêtement utilisé dans la méthode pour donner des propriétés biocides à un support peut être le matériau défini dans une ou plusieurs des formes de réalisation indiquées plus haut pour le matériau pour une utilisation biocide.

Selon une ou plusieurs formes de réalisation, la tension électrique est comprise entre environ - 1,2V et environ +1,2V, par exemple entre environ 0mV et environ 800mV, ou 0mV et environ - 800mV.

Selon un autre aspect, la description concerne une méthode non-thérapeutique pour donner des propriétés biocides à un support, la méthode comprenant :
- l'application d'une tension électrique audit support,
   le support incluant :
   - une structure conductrice, et
   - des groupements cationiques et/ou anioniques et/ou zwittérioniques et/ou ampholytes reliés de façon covalente à ladite structure conductrice.

Le support peut être composé du matériau tel que défini par une ou plusieurs des formes de réalisation indiquées plus haut.

Selon un autre aspect, la description concerne un matériau comprenant:
- une structure conductrice, et
- des groupements cationiques quaternaires reliés de façon covalente à ladite structure conductrice.

La structure conductrice de ce matériau peut celle définie dans une ou plusieurs des formes de réalisation indiquées plus haut pour le matériau pour une utilisation biocide.

Selon une ou plusieurs formes de réalisation, les groupements cationiques quaternaires sont des groupements phosphonium substitués par des groupements sélectionnés dans le groupe comprenant des chaînes alkyles linéaires comprenant entre quatre et douze atomes de carbone, par exemple entre six et dix atomes de carbone.

Les formes de réalisation décrites ci-dessus ne sont pas exhaustives. Notamment, il est entendu que des formes de réalisation supplémentaires peuvent être envisagées sur la base de différentes combinaisons des formes de réalisation explicitement décrites. Sauf spécification contraire dans la présente description, il sera apparent pour l'homme du métier que toutes les formes de réalisation décrites ci-dessus peuvent être combinées entre elles. Par exemple, sauf spécification contraire, toutes les caractéristiques des formes de réalisation décrites ci-dessus peuvent se référer à une utilisation thérapeutique et à une utilisation non-thérapeutique. En outre, sauf spécification contraire, toutes les caractéristiques des formes de réalisation décrites ci-dessus, qu'elles se réfèrent à la structure conductrice, aux groupements, au support, au revêtement ou à l'application, peuvent être combinées avec ou remplacées par d'autres caractéristiques d'autres formes de réalisation.

### BREVE DESCRIPTION DES DESSINS

Des formes de réalisation selon les aspects référencés ci-dessus ainsi que des avantages supplémentaires apparaîtront à la lecture de la description illustrée par les Figures suivante et les revendications annexées.
La FIG. 1 est un schéma illustrant le mécanisme d'action biocide d'un matériau pour une utilisation biocide selon une forme de réalisation de la présente description.
La FIG. 2 est un schéma illustrant en détail un système biocide selon une forme de réalisation de la présente description.
La FIG. 3 est un schéma illustrant, de façon agrandie, l'électrode de travail (= dispositif biocide du système de la FIG. 2), comprenant un matériau selon une forme de réalisation de la présente description.

### DESCRIPTION DETAILLEE

Dans la description détaillée suivante, des formes de réalisation de la présente description, de nombreux détails spécifiques sont exposés afin de fournir une compréhension plus approfondie de la présente description. Cependant, il apparaîtra à l'homme du métier que la présente description peut être mise en oeuvre sans ces détails spécifiques. Dans d'autres cas, des caractéristiques bien connues n'ont pas été décrites en détail pour éviter de compliquer inutilement la description.

La description qui suit donne un exemple de matériau pour une utilisation biocide selon une forme de réalisation de la présente description, un exemple de dispositif et de système biocides selon une forme de réalisation de la présente description ainsi qu'un exemple de méthode pour donner des propriétés biocides à un support.

### Exemple 1 : préparation d'un matériau pour une utilisation biocide

Dans un premier temps, des chaînes incluant des groupements cationiques phosphonium quaternaires, et représentées par la Formule II suivante ont été synthétisés selon un protocole connu et par exemple décrit dans le document Lin et al., A reversible supramolecular assembly containing ionic interactions and disulfide linkages, New. J. Chem., 38, pages 5186-5189, 2014.

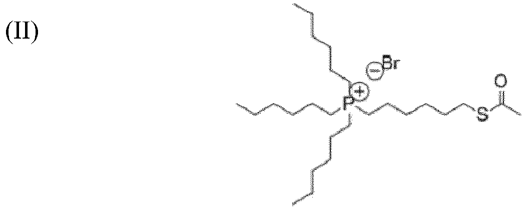

Les chaînes correspondantes, appelées FB248, ont ensuite été greffées par chimisorption sur une surface d'or selon le schéma réactionnel suivant :

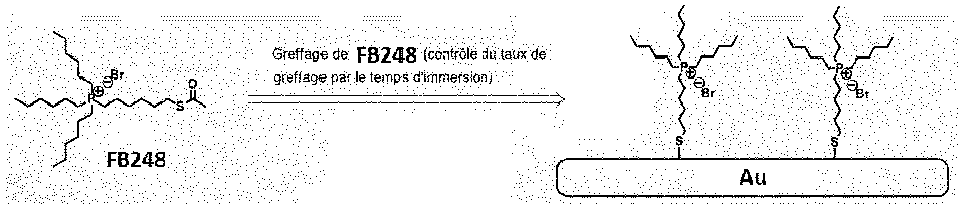

### Exemple 2 : système biocide et méthode pour donner des propriétés biocides à un support.

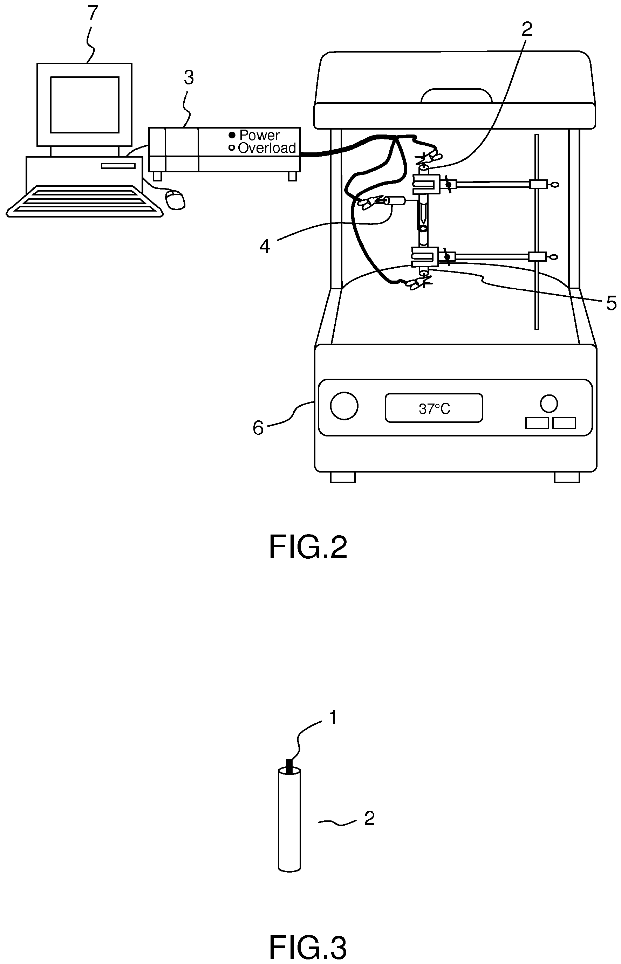

Un système biocide selon une ou plusieurs formes de réalisation de la présente description est illustré par la Figure 2. Dans l'exemple de la Figure 2, le système biocide comprend un dispositif biocide comprenant un support et un moyen pour soumettre le support à une tension électrique prédéterminée. Le support de l'exemple la Figure 2 est une électrode de travail 2 incluant le matériau mentionné ci-dessus dans l'Exemple 1, à savoir un matériau comprenant une structure conductrice composée d'or sous forme métallique (Au(0)), à laquelle sont reliés de façon covalente des groupements phosphonium. L'électrode de travail 2 est également illustrée de façon agrandie sur la Figure 3.

Le moyen pour soumettre le support à une tension électrique prédéterminée comprend un générateur de courant 3 (VersaSAT3, METEK), une électrode de référence 4 et une contre électrode 5 dont la surface est équivalente à celle de l'électrode de travail 2.

Le système comprend en outre une chambre de culture thermostatée 6 et un système informatique de pilotage et d'enregistrement de données 7 sur lequel a été installé un logiciel VersaStudio conçu pour la voltampérométrie cyclique.

En relation avec les expériences décrites dans le Tableau 1, les trois électrodes 2, 4 et 5 ont été plongées dans une suspension bactérienne de *Staphylococcus aureus* à 10⁶ UFC/mL dans une solution de « Mueller Hinton Broth II for microbiology, cation-adjusted » (MHII) en tant qu'électrolyte. Une tension électrique a été fournie, par voltampérométrie cyclique de 0 à 0,7V à une vitesse de balayage de 0,01V/sec, pendant 4h.

L'électrode de travail 2 a été placée dans l'incubateur 8 à 37°C. Pour chaque expérimentation, un dénombrement de la suspension bactérienne de départ est réalisé. D'autre part, un tube témoin sans électrode, non illustré sur la Figure 1, comprenant une suspension bactérienne de *Staphylococcus aureus* à 10⁶ CFU/mL dans une solution de MHII, a été systématiquement incubé dans les mêmes conditions que l'électrode de travail 2. Au terme de l'incubation, un dénombrement des deux solutions (témoin et soumise à la tension électrique) a été réalisé, par étalement de 100µL de différentes dilutions sur géloses incubées à 37°C pendant 18 à 24 heures.

Dès réception, la souche de bactérie *Staphylococcus aureus* a été repiquée, souchée et dénombrée selon des protocoles usuels et connus par l'homme du métier. Ces protocoles comprennent notamment l'étalement par épuisement, le repiquage d'une colonie dans un bouillon de culture incubé dans les conditions optimales de croissance bactérienne (37°C 160 rpm O₂), la réalisation d'une ampoule de souchage (300 µl glycérol 50% et 700µl de suspension bactérienne), le dénombrement par étalement de 100 µl de cascade de dilutions de 10¹⁰ à 10 UFC/ml, sur gélose nutritive, l'incubation ON à 37°C sous O₂ puis le comptage. L'équivalence unité DO-UFC/mL a ainsi pu être obtenue. Ces données permettent un ensemencement standard pour chaque série d'expérimentations.

Le caractère biocide de l'électrode de travail 2 a été déterminé avec et sans potentialisation. Quelles que fussent les conditions appliquées, aucune inhibition de croissance n'a été observée dans le cas du tube témoin (sans application de tension électrique).

L'expérience réalisée sur 4 heures a montré une activité de la potentialisation du matériau. En effet, une décroissance a été observée lorsque l'électrode de travail 2 a été soumise à une tension électrique alors qu'en l'absence de potentiel, une croissance bactérienne a été mise en évidence.

Au terme des 4 heures d'expérimentation, une différence supérieure à 1 Log(UFC/mL) a été observée entre le cas de l'électrode de travail 2 soumise à une tension électrique et le cas de l'électrode de travail 2 non soumise à une tension électrique. (Expériences 1 et 2 du Tableau 1).

Selon deux exemples comparatifs (Expériences 3 et 4), une électrode de travail a été utilisée incluant un matériau composé uniquement d'or, sans qu'aucun groupement ne soit relié à ce dernier, permettent de confirmer la supériorité du matériau tel que défini dans l'Exemple 1 pour des applications biocides.

**Tableau 1**

| Expérience | Log(UFC/mL) |
|---|---|
| 1 Electrode de travail 2, soumise à une tension électrique | 6,21 |
| 2 Electrode de travail 2, non soumise à une tension électrique | 7,4 |
| 3 Electrode de travail d'or, soumise à une tension électrique | 7,57 |
| 4 Electrode de travail d'or, non soumise à une tension électrique | 7,7 |

## Revendications

1. Matériau pour une utilisation biocide comprenant :
- une structure conductrice et
- des groupements cationiques et/ou anioniques et/ou zwittérioniques et/ou ampholytes reliés de façon covalente à ladite structure conductrice.

2. Matériau pour une utilisation biocide selon la revendication 1, dans lequel la structure conductrice est choisie parmi le groupe comprenant les métaux, les polymères pi-conjugués et les combinaisons de ceux-ci.

3. Matériau pour une utilisation biocide selon la revendication 1 ou la revendication 2, dans lequel les groupements reliés de façon covalente à la structure conductrice sont des groupements cationiques quaternaires.

4. Dispositif biocide comprenant :
- un support et
- un revêtement dudit support,
dans lequel le revêtement comprend :
- une structure conductrice, et
- des groupements cationiques et/ou anioniques et/ou zwittérioniques et/ou ampholytes reliés de façon covalente à ladite structure conductrice.

5. Dispositif biocide comprenant un support incluant :
- une structure conductrice, et
- des groupements cationiques et/ou anioniques et/ou zwittérioniques et/ou ampholytes reliés de façon covalente à ladite structure conductrice.

6. Dispositif biocide selon la revendication 4 ou la revendication 5, dans lequel la structure conductrice est choisie parmi le groupe comprenant les métaux, les polymères pi-conjugués et les combinaisons de ceux-ci.

7. Dispositif biocide selon l'une quelconque des revendications 4-6, dans lequel le support est sélectionné dans le groupe comprenant les dispositifs médicaux, les dispositifs vétérinaires, les emballages alimentaires et/ou cosmétiques ainsi que les conduits ou les cuves de stockage de produits agroalimentaires et/ou cosmétiques.

8. Dispositif biocide selon la revendication 7, dans lequel le support est un dispositif médical implantable.

9. Dispositif biocide selon la revendication 8, dans lequel le dispositif médical implantable est sélectionné dans le groupe comprenant une prothèse orthopédique, un pacemaker, une valve cardiaque, un implant dentaire, une prothèse, un cathéter veineux ou urinaire, un stimulateur cardiaque, un dispositif destiné à l'angioplastie, un ligament artificiel, des vis plaques de réparation orthopédiques, un défibrillateur, un implant cochléaire, un neurostimulateur, et un système de délivrance de médicaments

10. Système biocide comprenant :
- le dispositif biocide selon l'une quelconque des revendications 4-9, et
- un moyen pour soumettre le support et/ou le revêtement dudit support à une tension électrique prédéterminée.

11. Méthode non-thérapeutique pour donner des propriétés biocides à un support, la méthode comprenant :
- le greffage par voie chimique ou le dépôt d'un revêtement sur un support; et
- l'application d'une tension électrique audit support et/ou audit revêtement ainsi greffé ou déposé,
le revêtement comprenant :
- une structure conductrice, et
- des groupements cationiques et/ou anioniques et/ou zwittérioniques et/ou ampholytes reliés de façon covalente à ladite structure conductrice.

12. Méthode non-thérapeutique pour donner des propriétés biocides à un support, la méthode comprenant :
- l'application d'une tension électrique à un support,
le support incluant :
- une structure conductrice, et
- des groupements cationiques et/ou anioniques et/ou zwittérioniques et/ou ampholytes reliés de façon covalente à ladite structure conductrice.

13. Méthode selon la revendication 11 ou la revendication 12, dans laquelle le support est sélectionné dans le groupe comprenant les emballages alimentaires et/ou cosmétiques ainsi que les conduits ou les cuves de stockage de produits agroalimentaires et/ou cosmétiques.

14. Matériau comprenant :
- une structure conductrice, et
- des groupements cationiques quaternaires reliés de façon covalente à ladite structure conductrice.

15. Utilisation non-thérapeutique d'un matériau comprenant :
- une structure conductrice et
- des groupements cationiques et/ou anioniques et/ou zwittérioniques et/ou ampholytes reliés de façon covalente à ladite structure conductrice,
pour donner des propriétés biocides à des supports.
